(19) Europäisches Patentamt
European Patent Office
Office européen des brevets

(11) EP 0 736 961 A1

(12) DEMANDE DE BREVET EUROPEEN

(43) Date de publication:
09.10.1996 Bulletin 1996/41

(51) Int Cl.⁶: H02P 6/18, H02P 8/34

(21) Numéro de dépôt: 96400747.0

(22) Date de dépôt: 05.04.1996

(84) Etats contractants désignés:
DE ES GB IT

(30) Priorité: 07.04.1995 FR 9504164

(71) Demandeur: MAGNETI MARELLI FRANCE
F-92000 Nanterre (FR)

(72) Inventeur: Marteau, Bernard
91430 Igny (FR)

(74) Mandataire: Texier, Christian
Cabinet Regimbeau,
26, Avenue Kléber
75116 Paris (FR)

(54) Dispositif de contrôle angulaire d'un moteur pas à pas

(57) La présente invention concerne un dispositif de commande et de contrôle d'un moteur pas à pas (M, B1, B2), caractérisé par le fait qu'il comprend: des moyens de détection (100) aptés à détecter la force contre-électromotrice induite dans un enroulement alimenté (B1, B2), en retranchant de la tension régnant aux bornes de cet enroulement, un signal représentatif de la chute de tension aux bornes de la résistance (RB1) et de la self (LB1) de cet enroulement, et des moyens de contrôle (200, 202, 204) aptes à définir la position angulaire du rotor à partir de la force contre-électromotrice détectée.

FIG_5

## Description

La présente invention concerne le domaine des dispositifs de commande et de contrôle des moteurs pas à pas.

Le but général de la présente invention est de proposer des moyens permettant de connaitre avec précision la position angulaire du rotor d'un moteur pas à pas.

Les moteurs pas à pas comprennent généralement un stator comprenant un circuit magnétique et plusieurs enroulements (typiquement deux) définissant N paires de pôles lesquels sont alternativement nord et sud, et un rotor coaxial au stator, qui possède X paires de pôles. L'alimentation des enroulements à l'aide d'une tension électrique contrôlée, par exemple des signaux proportionnels au sinus et cosinus de l'angle recherché, génère un champ magnétique rotatif suivi par le rotor.

Les moteurs pas à pas présentent des caractéristiques, notamment de couple moteur, vitesse et accélération, qui en font des outils séduisants dans de nombreux domaines d'applications.

Dans le domaine automobile par exemple, il a été envisagé déjà depuis de nombreuses années d'utiliser des moteurs pas à pas pour piloter les indicateurs à aiguille intégrés dans les tableaux de bord ou encore pour piloter différents organes mécaniques, tels que papillon de contrôle moteur.

Cependant les moteurs pas à pas n'ont pas connu jusqu'ici, dans de nombreux domaines, le développement escompté.

Ceci semble du en particulier au fait que les moteurs pas à pas présentent un inconvénient majeur : l'observation des signaux d'alimentation électrique ne permet pas de garantir la position du rotor. En particulier les moteurs pas à pas présentent parfois des sauts accidentels de pas (perte ou avance) par exemple sous l'influence de signaux parasites, totalement indépendants des signaux d'alimentation.

On a bien sûr tenté de surmonter cette difficulté. Cependant les tentatives actuelles n'ont pas donné totalement satisfaction.

On a proposé par exemple d'associer les moteurs pas à pas à des capteurs d'angle, notamment des capteurs d'angle mécaniques ou optiques. Cependant cette solution conduit à des structures complexes, onéreuses et encombrantes.

On a également proposé dans le document EP-A-0 382 887 un procédé d'actionnement d'un moteur pas à pas, permettant d'initialiser la position de celui-ci, qui consiste à : commander le moteur pour déplacer le rotor ou un élément lié au rotor, vers une butée mécanique de position connue, détecter la tension induite dans un enroulement du moteur non alimenté et par conséquent ne prenant pas part à l'entrainement tandis qu'au moins un autre enroulement du moteur est alimenté, et interpréter l'absence de tension induite dans l'enroulement non alimenté comme signifiant que la butée mécanique est atteinte.

Le document EP-A-0 403 691 propose un autre procédé d'initialisation de la position d'un moteur pas à pas qui consiste à : commander le moteur pour déplacer le rotor ou un élément lié au rotor, vers une butée mécanique de position connue, et détecter l'atteinte de cette butée en alternant des cycles d'entrainement du moteur et des cycles de test au cours desquels l'un des enroulements du moteur reçoit des signaux de test périodiques tandis que l'on compare les tensions induites mesurées aux bornes d'un autre enroulement non alimenté, au cours de deux cycles de test successifs. Si les tensions induites mesurées au cours de deux cycles de test successifs aux bornes de l'enroulement non alimenté sont identiques, le moteur est considéré à l'arrêt, la butée mécanique étant atteinte. En revanche le système considère que la butée mécanique n'est pas atteinte et que le moteur est en mouvement si ces tensions induites mesurées au cours de deux cycles de test successifs diffèrent entre elles.

Le document FR-A-2 576 469 propose un procédé de contrôle d'un moteur pas à pas qui consiste à mesurer la tension induite dans un enroulement non alimenté, pendant l'alimentation d'au moins un autre enroulement, et à détecter soit le maximum par lequel passe la valeur de cette tension induite, soit le passage de sa valeur par un seuil de référence, au delà duquel on estime que le pas est franchi, pour valider le passage d'un pas commandé.

Le document US-A-4 282 471 propose un circuit de contrôle d'un moteur pas à pas qui comprend deux amplificateurs opérationnels sensibles à des signaux d'excitation appliqués à des enroulements respectifs, lesquels amplificateurs simulent une tension induite dans un enroulement non alimenté, et un comparateur qui compare cette tension simulée à la tension mesurée aux bornes de l'enroulement non alimenté, pour déduire la force contre-électromotrice générée dans cet enroulement non alimenté.

Le document EP-A-46 722 propose pour contrôler le blocage d'un moteur pas à pas, de mesurer la tension aux bornes d'un enroulement non alimenté, afin de détecter la tension induite par un signal d'excitation appliqué à un autre enroulement. Le moteur est considéré comme bloqué si la tension induite ainsi mesurée est supérieure à un seuil.

La nécessité de ne pas alimenter un enroulement pour mettre en oeuvre les processus décrits dans les documents précités conduit à des contraintes qui ne sont pas toujours acceptables.

Les moyens ainsi proposés conformes à l'état de la technique ne donnent donc pas totalement satisfaction.

La présente invention a pour but de perfectionner les moyens connus de commande et de contrôle de moteurs pas à pas et de proposer de nouveaux moyens permettant de contrôler avec précision la position d'un moteur pas à pas.

Ce but est atteint selon la présente invention grâce à un dispositif de commande et de contrôle d'un moteur pas à pas, comprenant des moyens de détection aptes à détecter la force contre-électromotrice induite dans un enroulement alimenté, en retranchant de la tension régnant aux bornes de cet enroulement, un signal représentatif de la chute de tension aux bornes de la résistance et de l'auto-inductance de cet enroulement, et des moyens de contrôle aptes à définir la position angulaire du rotor à partir de la force contre-électromotrice détectée.

D'autres caractéristiques, buts et avantages de la présente invention apparaitront à la lecture de la description détaillée qui va suivre et en regard des dessins annexés, donnés à titre d'exemple non limitatif et sur lesquels:

- la figure 1 représente une vue schématique générale d'un circuit de commande conforme à la présente invention,
- la figure 2 représente une vue schématique des moyens de détection conformes à la présente invention,
- la figure 3 représente une vue détaillée d'un exemple de réalisation de ces moyens de détection,
- la figure 4 représente la courbe de réponse d'un dérivateur constituant l'un des étages de ces moyens de détection, selon un mode de réalisation préférentiel de l'invention,
- la figure 5 représente une vue schématique, sous forme de bloc fonctionnel, du schéma complet d'un dispositif de commande et de contrôle conforme à la présente invention, et
- la figure 6 représente un exemple de circuit intégrateur associé à un circuit de détection de passage à zéro appartenant à ce dispositif conforme à l'invention.

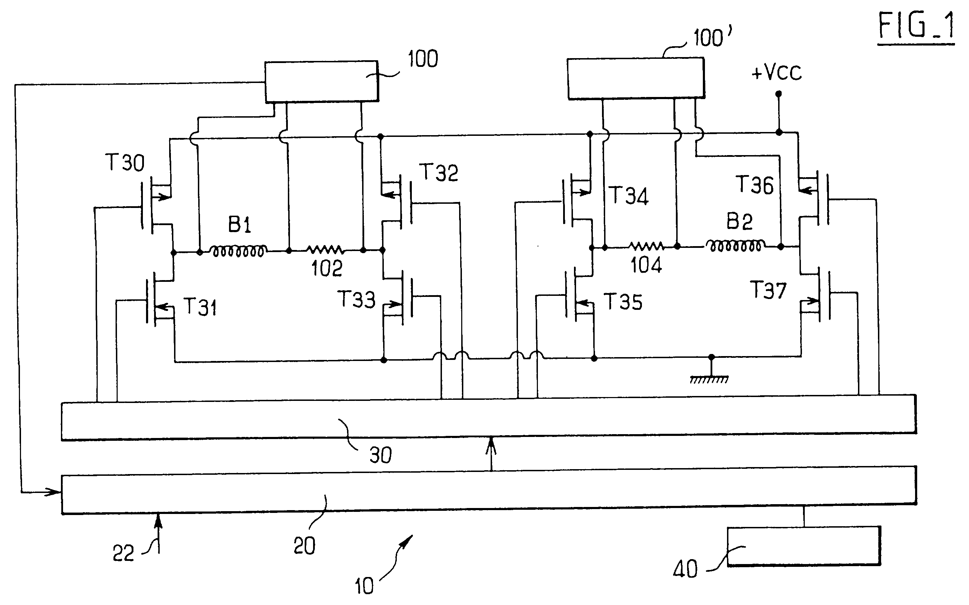

On va tout d'abord décrire la structure générale du circuit 10 de commande d'un moteur pas à pas représenté sur la figure 1.

Sur cette figure 1, on a représenté les deux enroulements du moteur sous les références B1 et B2.

Le circuit de commande 10 comprend essentiellement une unité centrale 20, un circuit de sortie 30, une table de mémoire 40 et un circuit de détection 100.

La table de mémoire 40 est adaptée pour contenir des données, de préférence numériques, représentant les valeurs trigonométriques des angles à parcourir. La table 40 peut contenir par exemple les valeurs en 128 points d'une fonction sinus de 0° à 90°.

L'unité 20 reçoit sur son entrée 22 un signal d'entrée représentatif de l'angle à atteindre par le rotor du moteur, par exemple représentatif de l'angle à visualiser à l'aide d'une aiguille liée à l'arbre de sortie de ce rotor ou encore l'angle requis pour obtenir une position de consigne sur un papillon de contrôle moteur, lié à ce rotor.

L'unité 20 convertit ce signal par traitement selon des modalités bien connues de l'homme de l'art en une valeur représentative de l'angle à atteindre.

L'amplitude des signaux en sinus et cosinus devant être appliqués respectivement aux deux bobines B1 et B2 pour atteindre l'angle de déviation recherché est déterminée par lecture de la table 40.

Pour celà les valeurs en sinus sont lues dans la table 40 en lecture normale, c'est à dire en commençant la lecture de la table au début de celle-ci, et les valeurs en cosinus sont lues dans la même table 40 en sens inverse, c'est à dire en commençant la lecture de cette table par la fin.

Par ailleurs les valeurs positive et négative des signaux de commande du moteur pas à pas sont obtenues en inversant le sens du courant dans les enroulements B1 et B2.

A cette fin, comme on le voit sur la figure 1, de préférence chaque extrémité des enroulements B1 et B2 est alimentée, de façon connue en soi, par l'intermédiaire d'un pont de deux interrupteurs commandés T30 à T37 rendus alternativement passant selon le sens du courant recherché et reliés respectivement à une tension d'alimentation positive +VCC et à la masse. De tels interrupteurs commandés sont formés de préférence de transistors MOS respectivement de type N et de type P.

Par ailleurs, dans le cadre de la présente invention, les interrupteurs T30 à T37 peuvent être alimentés par des signaux en PWM générés par l'étage de sortie 30, c'est-à-dire des signaux d'amplitude constante et de rapports cycliques variables. Si les signaux d'alimentation sont en PMW, il faut prévoir des filtres adaptés en conséquence dans le circuit de traitement.

Le circuit de détection 100 a pour fonction de reconstituer la force contre-électromotrice induite dans l'un des enroulements alimentés du moteur, par exemple l'enroulement B1, résultant de la rotation de l'aimant porté par le rotor, en regard de cet enroulement.

Plus précisément, le circuit de détection 100 est conçu pour retrancher de la tension régnant aux bornes de cet enroulement, un signal représentatif de la chute de tension aux bornes de la résistance et de la self de cet enroulement.

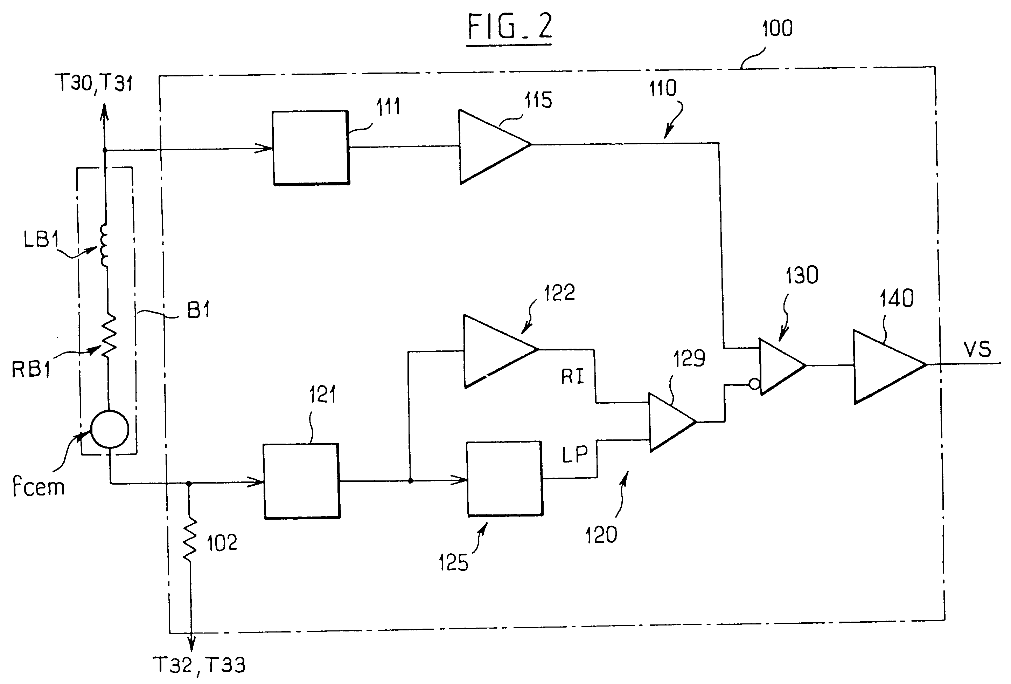

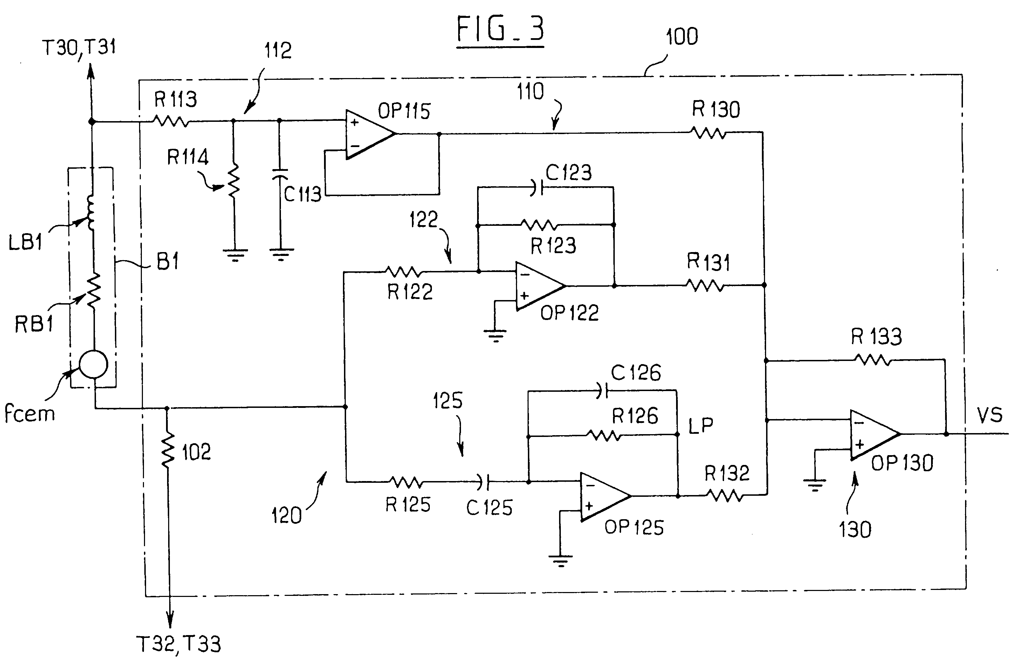

Sur les figures 2 et 3 annexées, la résistance de l'enroulement B1 est référencée RB1, tandis que la partie selfique de cet enroulement est référencée LB1.

La force contre-électromotrice générée dans l'enroulement B1 est quant à elle schématisée sous forme du générateur référencé fcem sur les figures 2 et 3.

Le circuit de détection 100 comprend un shunt résistif 102 (par exemple de l'ordre de 10Ω pour une self de 170mH) connecté en série de l'enroulement B1. La mesure de la tension aux bornes de cet enroulement B1 permet de mesurer l'amplitude du courant circulant dans l'enroulement B1.

Un shunt résistif 104 identique est connecté en série du deuxième enroulement B2.

Comme on le voit sur les figures 2 et 3, le circuit de détection 100 comprend un soustracteur 130 qui reçoit par une première branche 110, un signal représentatif de la tension sur la borne de l'enroulement opposé à la résistance 102, et par une seconde branche 120, un signal représentatif de la chute de tension dans l'enroulement B1 (somme de la tension aux bornes de la partie résistive RB1 et de la tension aux bornes de la partie selfique LB1).

La première branche 110 illustrée sur la figure 2 comprend un filtre passe bas 111, ayant par exemple une coupure à 100Hz, pour éliminer les harmoniques du signal résultant de la commande en PWM. Le filtre 111 a son entrée reliée à la borne de l'enroulement B1 opposée à la résistance 102. Le filtre 111 est suivi d'un amplificateur suiveur 115.

La seconde branche 120 illustrée sur la figure 2, comprend un filtre passe bas 121 similaire au filtre 111, dont l'entrée est reliée au point commun à l'enroulement B1 et à la résistance 102.

Le filtre 121 est suivi de deux sous-branches 122, 125 montées en parallèle.

La sous-branche 122 a pour fonction de délivrer un signal représentatif de la chute de tension aux bornes de la partie résistive RB1. Pur cela, la sous-branche 122 comprend un amplificateur dont l'entrée est reliée à la sortie du filtre 121.

La sous-branche 125 a pour fonction de délivrer un signal représentatif de la chute de tension aux bornes de la partie selfique LB1. Pour cela la sous-branche 125 comprend un étage dérivateur dont l'entrée est reliée à la sortie du filtre 121.

Les signaux de sortie des sous-branches 122 et 125 sont additionnés dans un sommateur 129.

De préférence, la sortie du soustracteur 130 est amplifiée dans un étage de sortie 140.

Le signal de sortie de cet étage 140 représente la force contre-électromotrice induite dans l'enroulement B1.

On aperçoit un schéma détaillé d'un tel circuit de détection sur la figure 3. Sur cette figure 3, on retrouve l'enroulement B1, schématisé par sa partie selfique LB1, sa partie résistive RB1 et la force contre-électromotrice fcem. Sur la figure 3, on retrouve également les branches 110,120 et sous-branches 122, 125, ainsi que l'additionneur de sortie 130.

La branche 110 comprend un atténuateur résistif d'entrée 112 comprenant deux résistances R113, R114, connectées en série entre la borne de l'enroulement B1 opposée à la résistance 102 et la masse.

La coupure correspondant au filtre passe bas 111 est établie grâce à un condensateur C113 connecté en parallèle de la résistance R114.

L'amplificateur suiveur 115 est formé d'un amplificateur OP115 dont l'entrée non inverseuse est reliée aux points communs des deux résistances R113, R114, tandis que sa sortie est rebouclée sur son entrée inverseuse.

La sous-branche 122 comprend un amplificateur organisé autour d'un amplificateur opérationnel OP122. L'entrée non inverseuse de OP122 est reliée à la masse. L'entrée inverseuse de OP122 est reliée au point commun à la résistance 102 et à l'enroulement B1 par l'intermédiaire d'une résistance de liaison R122. La sortie de OP122 est rebouclée sur son entrée inverseuse par l'intermédiaire d'une résistance R123 et d'un condensateur C123 connecté en parallèle.

La sous-branche 122 détermine ainsi une coupure équivalente à celle fournie par le filtre 121 schématisé en amont de la sous-branche 122 sur la figure 2.

La sous-branche 125 est organisée autour d'un amplificateur opérationnel OP125.

La borne non inverseuse de OP125 est reliée à la masse. L'entrée inverseuse de OP125 est reliée au point commun à la résistance 102 et à l'enroulement B1, par l'intermédiaire d'une résistance R125 et d'un condensateur C125 connecté en série. En outre, la sortie de OP125 est rebouclée sur son entrée inverseuse par l'intermédiaire d'une résistance R126 et d'un condensateur C126 connectée en parallèle.

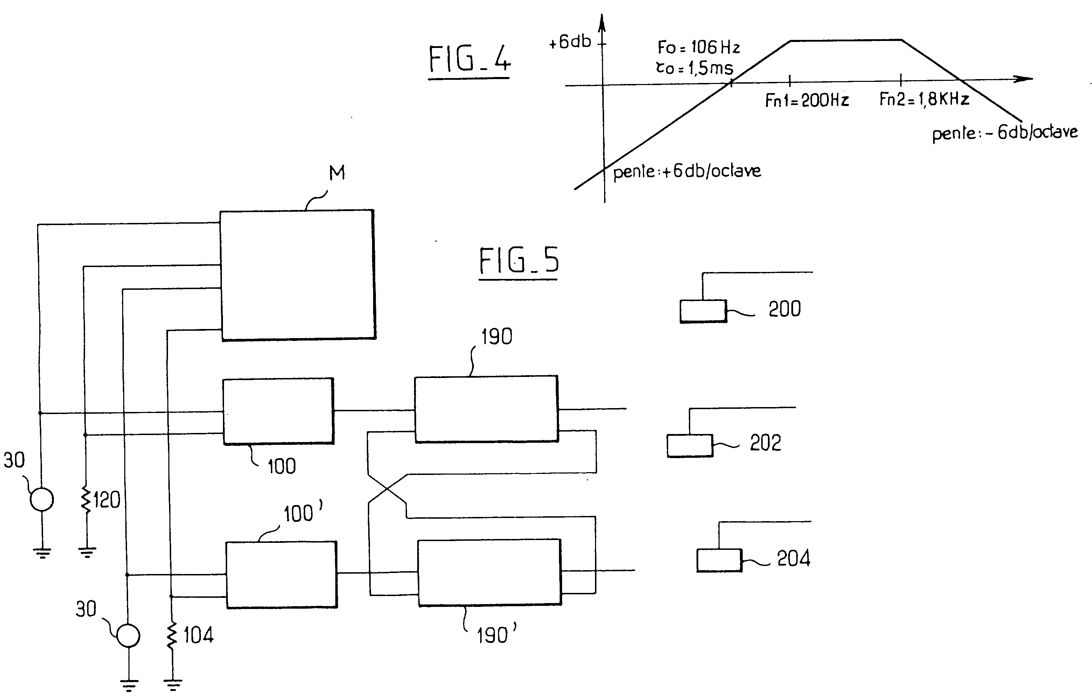

On a schématisé sur la figure 4, la réponse du dérivateur ainsi formé.

De préférence, le dérivateur 125 présente une pente ascendante à + 6db/octave jusqu'à environ 200Hz, un palier dans une plage allant par exemple de l'ordre de 200Hz à 1,8kHz, puis une pente descendante à -6db/octave pour les fréquences supérieures.

Là encore, l'homme de l'art comprendra que la fréquence de coupure schématisée par le filtre 121 sur la figure 2 est réalisée par le dérivateur 125 lui-même.

Enfin l'additionneur 130 est articulé autour d'un amplificateur opérationnel OP130 dont l'entrée non inverseuse est reliée à la masse.

L'entrée inverseuse de OP130 est reliée à la sortie de OP115 par une résistance de liaison R130, à la sortie de OP122 par l'intermédiaire d'une résistance de liaison R131, et à la sortie de OP125 par l'intermédiaire d'une résistance de liaison R132. La sortie de OP130 est rebouclée sur son entrée inverseuse par l'intermédiaire d'une résistance R133.

Le schéma illustré sur la figure 3 est adapté pour délivrer en sortie un signal de la forme :

$$Vs = Vsin - Vmes \left[((Rmes+Rmot) / Rmes) + (Lp/Rmes)\right]$$

dans laquelle :

Vsin représente la tension mesurée sur la borne de l'enroulement B1 opposé à la résistance 102,
Vmes représente la tension mesurée aux bornes de la résistance 102,
Rmes représente la résistance de ce shunt 102,
Rmot représente la résistance de la partie résistive RB1 du moteur, et
Lp représente l'impédance de la partie selfique LB1 du moteur.

Selon une variante de réalisation, le circuit 110 peut comprendre des moyens tenant compte de la dérive en température sur les bobines B1, B2 du moteur, plus précisément de la variation de résistance du cuivre composant ces enroulements, en fonction de la tempéture.

A cette fin, selon une caractéristique avantageuse de l'invention, le circuit de détection 100 comprend un système de commande automatique de gain qui s'étalonne, à l'arrêt du moteur, c'est-à-dire lorsque la force contre-électromotrice fcem induite est nulle.

Pour cela, on peut prévoir par exemple sur la sous-branche 122 un ajustage numérique du gain grâce à un convertisseur numérique/analogique.

Un processeur du circuit de détection 100 pourrait ainsi régler le gain de la sous-branche 122, pour régler son zéro, quand le moteur est arrêté depuis un temps minimum prédéterminé, par exemple depuis plus de 200ms.

Comme on l'a indiqué précédemment, le signal disponible à la sortie de l'étage 130, représentatif de la force contre-électromotrice dans l'enroulement B1, est ensuite interprété dans des moyens de contrôle pour définir la position angulaire du rotor.

Plus précisément, ces moyens de contrôle exploitent de préférence les signaux représentatifs des forces contre-électromotrices générées dans les deux enroulements B1, B2. La force contre-électromotrice générée dans l'enroulement B2 est détectée à l'aide d'un circuit 100' identique au circuit 100 et relié aux bornes de l'enroulement B2 et du shunt 104.

Ces moyens de contrôle peuvent faire l'objet de plusieurs variantes de réalisation.

Selon une première de ces variantes, les moyens de contrôle exploitent une fonction arctangente du rapport des forces contre-électromotrices induites dans les deux enroulements B1 et B2.

En effet, une analyse montre que le rapport des forces contre-électromotrices induites dans les enroulements B1 et B2 est proportionnel à la tangente de l'angle parcouru par le rotor du moteur.

La fonction arctangente du rapport des fcem permet de retrouver l'angle, modulo $\pi$ radians.

Cependant, si le moteur possède N paires de poles sur le stator, la seule exploitation de la fonction arctangente d'un rapport des deux fcem, conduit à 2N discontinuités par tour moteur, sur la mesure de l'angle.

On peut bien sûr adapter l'algorithme de calcul pour résoudre ces discontinuités, afin de retrouver un angle continu sur un tour moteur, soit sur N cycles de commande électrique.

Cependant, selon une autre variante avantageuse de l'invention, les discontinuités peuvent être levées en effectuant également la détermination de l'angle à l'aide de la fonction arctangente du rapport inverse des forces contre-électromotrices. Cette seconde détermination de l'angle présente également des discontinuités modulo $\pi$. Cependant ces discontinuités sont décalées de $\pi/2$ par rapport à celles obtenues précédemment, ce qui facilite la reconstitution d'un angle continu sur un tour complet de rotation.

En d'autres termes, la première fonction arctangente du rapport des forces contre-électromotrices permet d'obtenir :

$$N\ \theta = \text{arctan (fcem B1 / fcem B2)},$$

tandis que la seconde fonction arctangente du rapport inverse des forces contre-électromotrices permet d'obtenir :

$$N\ \theta = \pi/2 - \text{arctan (fcem B2 / fcem B1)},$$

relation dans lesquelles :

N représente le nombre de paires de poles du stator,
$\theta$ représente l'angle du rotor à l'intérieur de l'un des N cycles requis pour accomplir un tour complet, et
fcem B1 et fcem B2 représentent respectivement les forces contre-électromotrices dans les enroulements B1 et B2.

Il faut noter que pour mettre en oeuvre le processus précité, la vitesse de rotation du rotor doit être suffisante pour que le niveau des signaux soit exploitable.

Selon une seconde variante, les moyens de contrôle exploitent le module de la vitesse du rotor.

Pour celà, les moyens de contrôle déterminent la somme des carrés des deux forces contre-électromotrices générées dans les enroulements B1 et B2 et issues des modules 100, 100'.

On obtient le module de la vitesse |vit| grâce à la relation :

$$|vit| = (1/Kv) \, (fcem \, B1^2 + fcem \, B2^2)^{1/2}$$

dans laquelle Kv représente une constante liée aux caractéristiques du moteur.

L'angle du rotor peut ensuite être connu par intégration de la vitesse ainsi obtenue.

Ce processus qui permet de connaître la vitesse instantanée, et de là l'angle, ne permet pas cependant de connaître le signe de la vitesse. Pour lever cette ambiguité, c'est-à-dire connaître le signe de la vitesse, qui représente le sens de rotation du moteur, on peut par exemple déterminer le signe de la tangente (ou rapport) entre les deux forces contre-électromotrices.

Dans le cadre de la présente invention, de préférence, le début du traitement (détermination des forces contre-électromotrices) est opéré par traitement analogique grâce au circuit représenté sur les figures 2 et 3.

En revanche, la détermination des tangentes est opéré de préférence en numérique à l'aide d'une table.

Quant à l'intégration de la vitesse, pour obtenir un angle, celle-ci peut être opérée soit en numérique, soit en analogique avec un intégrateur capacitif.

Selon une autre caractéristique avantageuse de la présente invention, il est procédé à une intégration en analogique des forces contre-électromotrices générées par les bobines, avant de procéder à l'exploitation de ces signaux pour reconstituer l'angle du rotor.

En intégrant les signaux en sinus et cosinus correspondant aux forces contre-électromotrices, on obtient des signaux équivalents respectivement en cosinus et sinus avec les avantages suivants :

- l'amplitude des signaux devient indépendante de la vitesse,
- après intégration on peut ralentir la vitesse d'échantillonnage, car les échantillons représentent bien ce qui s'est passé durant la période précédente,
- le bruit et les hautes fréquences sont rejetés par l'intégrateur ; le signal entrant dans le convertisseur analogique numérique est donc beaucoup plus propre.

Sur la figure 5, on a représenté :

- le moteur sous la référence M,
- les étages de sortie du module 30,
- les shunts 102, 104,
- les circuits de détection 100, 100',
- des étages intégrateurs 190, 190' reliés respectivement en sortie des circuits 100, 100',
- un module de contrôle 200 adapté pour déterminer l'angle à partir de la fonction arctangente d'un rapport des forces contre-électromotrices,
- un second module de contôle 202 adapté pour déterminer l'angle à partir de la fonction arctangente d'un rapport inverse des forces contre-électromotrices, et
- un troisième module de contrôle 204 adapté pour déterminer l'angle par intégration de la vitesse déterminée à partir de la somme des carrés des forces contre-électromotrices.

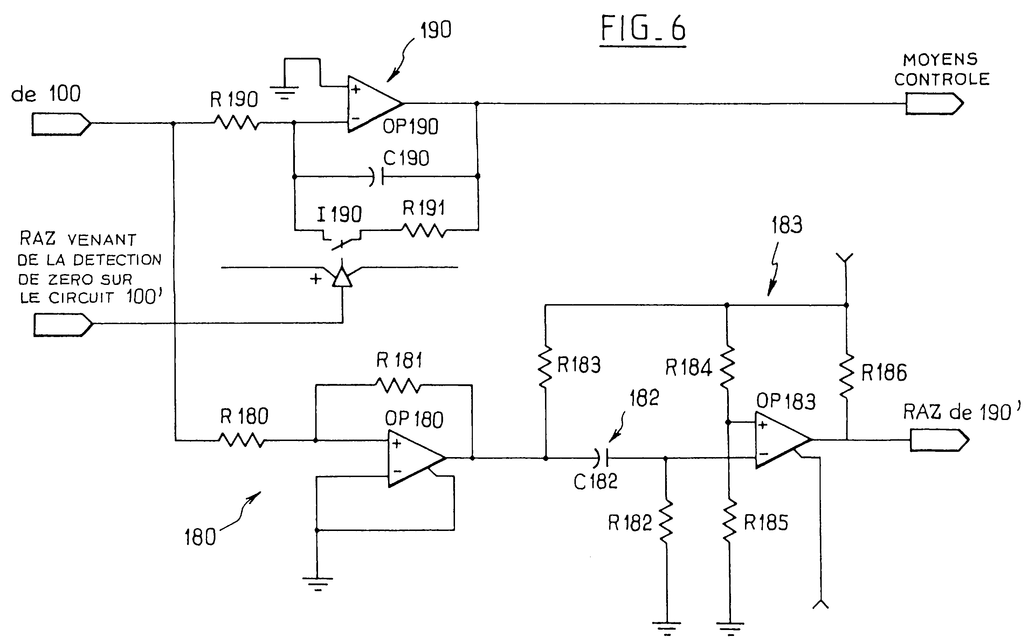

Les intégrateurs 190, 190' peuvent être réalisés comme représenté sur la figure 6, à l'aide d'un amplificateur opérationnel OP190 dont l'entrée non inverseuse est reliée à la masse, l'entrée inverseuse est reliée à la sortie du circuit amont 100 ou 100' par l'intermédiaire d'une résistance R190, la sortie est rebouclée sur son entrée inverseuse par un condensateur C190, ce dernier étant susceptible d'être déchargé par fermeture d'un interrupteur analogique I190 monté en parallèle, par l'intermédiaire d'une résistance R191.

La remise à zéro des intégrateurs 190, 190', par fermeture de l'interrupteur I190, peut être pilotée par un processeur.

Cependant, selon une variante de l'invention, on opère une détection croisée du passage à zéro sur une voie pour commander l'initialisation de l'intégrateur 190 sur l'autre voie.

Ainsi le passage à zéro de la fcem sur la bobine en sinus commande l'initialisation de l'intégrateur 190 de l'autre voie qui intègre la fcem de la bobine en cosinus donc fournit également un sinus.

On fait de même sur l'autre voie qui génère le cosinus.

On a représenté sur la figure 6 un module de détection de passage par zéro qui comprend :

- un comparateur 180 (amplificateur opérationnel OP180, et résistances R180, R181) qui bascule au passage à zéro,
- un dérivateur RC 182 (condensateur C182, résistance R182) qui détecte les fronts montants, et
- un second comparateur 183 (amplificateur opérationnel OP183, résistances R183, R184, R185, R186).

En pratique les moyens de contrôle 200, 202 et 204 peuvent être placés dans l'unité centrale 20.

La présente invention n'est pas limitée à l'application de la reconstitution d'un angle parcouru par le rotor d'un moteur pas à pas. Elle peut s'appliquer également à la détection du retour du rotor par une position de référence, par exemple arrivée en appui contre une butée mécanique d'un levier lié au rotor, tel qu'une aiguille indicatrice.

La présente invention peut s'appliquer à la commande d'un moteur pas à pas assurant l'entraînement d'une aiguille indicatrice. Cependant, elle n'est pas limitée à cette application. Elle peut par exemple concerner des applications où le moteur pas à pas doit entraîner un organe à rotation sur un angle supérieur à 360°, sous réserve de mémoriser chaque franchissement d'un tour complet de rotation.

L'invention permet par exemple de détecter d'éventuels blocages ou sauts de pas du moteur. Elle permet donc un contrôle de l'angle effectivement parcouru pour améliorer la sécurité de fonctionnement des moteurs.

En cas de défaut, le système peut :

- compenser le défaut en commandant l'angle perdu une deuxième fois,
- lancer une procédure de réinitialisation complète et vérifier l'efficacité de celle-ci,
- prévenir d'un éventuel défaut, par exemple afficher l'erreur, ou bien passer dans un mode dégradé.

Dans le cas d'un mécanisme ayant beaucoup d'inertie, on peut utiliser le système conforme à l'invention pour amortir les suroscillations en faisant un asservissement sur l'angle commandé.

Bien entendu la présente invention n'est pas limitée au mode de réalisation particulier qui vient d'être décrit mais s'étend à toute variante conforme à son esprit.

## Revendications

1. Dispositif de commande et de contrôle d'un moteur pas à pas (M, B1, B2), caractérisé par le fait qu'il comprend :

   - des moyens de détection (100) aptes à détecter la force contre-électromotrice induite dans un enroulement alimenté (B1, B2), en retranchant de la tension régnant aux bornes de cet enroulement, un signal représentatif de la chute de tension aux bornes de la résistance (RB1) et de la self (LB1) de cet enroulement, et
   - des moyens de contrôle (200, 202, 204) aptes à définir la position angulaire du rotor à partir de la force contre-électromotrice détectée.

2. Dispositif selon la revendication 1, caractérisé par le fait que les moyens de détection (100, 100) sont adaptés pour détecter la force contre-électromotrice induite dans deux enroulements (B1, B2) et que les moyens de contrôle (200, 202, 204) sont adaptés pur définir la position angulaire du rotor à partir de ces deux forces-électromotrices.

3. Dispositif selon l'une des revendications 1 ou 2, caractérisé par le fait que les moyens de détection (100, 100') comprennent au moins un shunt résistif (102, 104) connecté en série d'un enroulement pour mesurer le courant dans celui-ci.

4. Dispositif selon l'une des revendications 1 à 3, caractérisé par le fait que les moyens de détection (100, 100') comprennent un étage (122) amplificateur qui reçoit en entrée un signal représentant le courant dans un enroulement (B1), pour délivrer en sortie un signal représentant la chute de tension dans la résistance de cet enroulement, et un étage (125) dérivateur qui reçoit en entrée le même signal représentant le courant dans un enroulement (B1) pour délivrer en sortie un signal représentant la chute de tension dans la partie selfique de cet enroulement (B1).

5. Dispositif selon l'une des revendications 1 à 4, caractérisé par le fait que les moyens de détection (100, 100') comportent des moyens de mesure du courant dans un enroulement (B1, B2), équipés d'au moins un filtre passe-bas (111, 121).

6. Dispositif selon la revendication 4, caractérisé par le fait que le dérivateur (125) présente une pente ascendante à basse fréquence, suivie d'une réponse en palier puis d'une pente descendante pour les fréquences supérieures.

**7.** Dispositif selon l'une des revendications 1 à 6, caractérisé par le fait que les moyens de détection (100, 100') comprennent des moyens tenant compte de la dérive en température sur les enroulements du moteur.

**8.** Dispositif selon la revendication 7, caractérisé par le fait que les moyens de détection (100, 100') comprennent un système de commande automatique de gain qui s'étalonne quand le moteur est à l'arrêt.

**9.** Dispositif selon l'une des revendications 7 ou 8, caractérisé par le fait que les moyens de détection (100, 100') comprennent un étage (122) dont le gain est réglé par un convertisseur numérique/analogique lorsque le moteur est à l'arrêt.

**10.** Dispositif selon l'une des revendications 1 à 9, caractérisé par le fait que les moyens de contrôle (200) définissent la position angulaire du rotor à partir d'une fonction arctangente du rapport des forces contre-électromotrices détectées dans deux enroulements (B1, B2).

**11.** Dispositif selon l'une des revendications 1 à 10, caractérisé par le fait que les moyens de contrôle (200, 202) définissent la position angulaire du rotor à partir d'une fonction arctangente du rapport des forces contre-électromotrices (B1/B2) d'une part et du rapport invers de ces forces contre-électromotrices (B2/B1) d'autre part.

**12.** Dispositif selon l'une des revendications 1 à 11, caractérisé par le fait que les moyens de contrôle (204) définissent la position angulaire du rotor par intégration de la vitesse obtenue par somme de carrés des forces contre-électromotrices (B1, B2).

**13.** Dispositif selon la revendication 12, caractérisé par le fait que le sens de rotation du moteur est défini en déterminant le signe de la tangente des deux forces contre-électromotrices mesurées dans les enroulements (B1, B2).

**14.** Dispositif selon l'une des revendications 1 à 13, caractérisé par le fait qu'il comprend au moins un étage intégrateur (190, 190') apte à intégrer les signaux représentant les forces contre-électromotrices, avant d'appliquer ces signaux aux moyens de contrôle (200, 202, 204).

**15.** Dispositif selon la revendication 14, caractérisé par le fait que les moyens de détection (100, 100') comprennent deux voies associées respectivement à chaque enroulement (B1, B2), et sur chaque voie, des moyens (180) aptes à détecter le passage à zéro de la force contre-électromotrice, pour assurer l'initialisation de l'étage intégrateur (190) sur l'autre voie.

**16.** Dispositif selon la revendication 15, caractérisé par le fait que les moyens de détection (180) du passage à zéro de la force contre-électromotrice, comprennent un comparateur (180) qui bascule au passage à zéro et un dérivateur (182) qui détecte les fronts montants.

**17.** Dispositif selon l'une des revendications 1 à 16, caractérisé par le fait qu'il comprend :

- deux modules (100, 100') aptes à reconstituer les forces contre-électromotrices sur deux enroulements (B1, B2) du moteur,
- deux circuits intégrateurs (190, 190') aptes à intégrer les forces contre-électromotrices ainsi obtenues, et
- des moyens de contrôle (200, 202, 204) aptes à définir la position angulaire du rotor.

FIG_1

EP 0 736 961 A1

FIG. 2

FIG_3

EP 0 736 961 A1

## FIG_4

$F_o = 106\,Hz$
$\tau_o = 1,5\,ms$

+6db

$Fn1 = 200\,Hz$    $Fn2 = 1,8\,KHz$

pente : +6db/octave

pente : −6db/octave

## FIG_5

M

190

100

100'

190'

30

120

30

104

200

202

204

EP 0 736 961 A1

FIG_6

EP 0 736 961 A1

**Office européen des brevets**

# RAPPORT DE RECHERCHE EUROPEENNE

Numéro de la demande

EP 96 40 0747

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | EP-A-0 647 014 (GATE S.P.A.) | 1 | H02P6/18 |
| A | * abrégé; figure 2 * | 2 | H02P8/34 |
| | --- | | |
| Y | EP-A-0 316 077 (SONY CORP) | 1 | |
| | * abrégé; figure 2 * | | |
| | --- | | |
| A | US-A-5 367 234 (J. DITUCCI) | 1 | |
| | * colonne 1, ligne 30 - ligne 34; figure 2 * | | |
| | --- | | |
| Y | US-A-5 051 680 (D.J. BELANGER) | 1 | |
| | * abrégé; figure 1A * | | |
| | --- | | |
| A | EP-A-0 386 292 (SAG) | 1 | |
| | * abrégé; figure 7 * | | |
| | --- | | |
| D,A | EP-A-0 403 691 (VDO ADOLF SCHINDING AG) | 1 | |
| | * abrégé; figure 1 * | | |
| | --- | | |
| D,A | EP-A-0 382 887 (VDO RUDOLF SCHINDING AG) | 1 | |
| | * abrégé; figure 1 * | | DOMAINES TECHNIQUES RECHERCHES (Int.Cl.6) |
| | --- | | |
| D,A | FR-A-2 576 469 (REGIE NATIONALE DES USINES RENAULT) | 1 | H02P |
| | * abrégé; figure 2 * | | |
| | --- | | |
| D,A | US-A-4 282 471 (M.S. BUDNIAK ET AL) | 1 | |
| | * abrégé; figure 3 * | | |
| | --- | | |
| D,A | EP-A-0 046 722 (UNITED TECHNOLOGIES CORP) | 1 | |
| | * abrégé; figure 1 * | | |
| | ----- | | |

Le présent rapport a été établi pour toutes les revendications

| Lieu de la recherche | Date d'achèvement de la recherche | Examinateur |
|---|---|---|
| LA HAYE | 17 Mai 1996 | Beyer, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

14